Europäisches Patentamt

European Patent Office

Office européen des brevets

(11) Publication number: **0 146 305**
**B1**

## (12) EUROPEAN PATENT SPECIFICATION

(45) Date of publication of patent specification: **08.03.89**

(21) Application number: **84308409.6**

(22) Date of filing: **04.12.84**

(51) Int. Cl.⁴: **F 22 B 1/02, F 22 B 37/42**

(54) **Controlling leaks between primary and secondary circuits of a steam generator of a pressurised water reactor system.**

| | |
|---|---|
| (30) Priority: **19.12.83 US 562561** | (73) Proprietor: **THE BABCOCK & WILCOX COMPANY**<br>**1010 Common Street P.O. Box 60035**<br>**New Orleans Louisiana 70160 (US)** |
| (43) Date of publication of application:<br>**26.06.85 Bulletin 85/26** | |
| (45) Publication of the grant of the patent:<br>**08.03.89 Bulletin 89/10** | (72) Inventor: **Carlton, James D.**<br>**1601 Somerset Drive**<br>**Lynchburg Virginia 24503 (US)**<br>Inventor: **Helms, Thomas Christopher**<br>**2428 Indian Hill Road**<br>**Lynchburg Virginia 24503 (US)** |
| (84) Designated Contracting States:<br>**AT BE CH DE FR GB IT LI LU NL SE** | |
| (56) References cited:<br>**EP-A-0 114 519**<br>**DE-A-3 115 344** | (74) Representative: **Cotter, Ivan John et al**<br>**D. YOUNG & CO. 10 Staple Inn**<br>**London WC1V 7RD (GB)** |

Courier Press, Leamington Spa, England.

## Description

This invention relates to steam generators of pressurised water reactor systems and to methods of controlling leaks which occur between primary and secondary circuits inside a steam generator of a pressurised water reactor system.

During the shut-down of a nuclear power plant with a pressurised water reactor, as long as the heat removal from the primary coolant circuit occurs through the steam generator, saturation pressure corresponding to the temperature of secondary water in the steam generator prevails in the secondary circuit of the steam generator. The coolant on the primary side of the steam generator has a slightly higher temperature and is kept undercooled by connection to a pressuriser which provides a substantially higher pressure than the saturation pressure of the primary coolant. From these conditions, it necessarily results that the pressure on the primary side in the steam generator will be higher than the pressure on the secondary side.

After the occurrence of a heat-transfer tube leak in the steam generator, radioactive primary coolant therefore flows into the secondary side of the steam generator and represents the hazard of a liberation of radioactivity as well as flooding of the steam generator.

In traditional methods of controlling these incidents, the leak is reduced during the shut-down of the system by reducing the pressure differential between the primary coolant and the secondary side of the steam generator. A complete pressure equilisation so as to prevent such leakage is possible by foregoing an undercooling of the primary coolant thus resulting in saturated conditions in the primary coolant circuit. Such a condition is highly undesirable since it makes it difficult to guarantee the cooling of the core.

It has been proposed to solve this problem by isolating the steam generator by blocking off the live steam and feedwater lines of the secondary circuit and injecting gas into the secondary circuit of the steam generator to increase the pressure therein so that the pressure prevailing in the secondary side is equal to the pressure prevailing in the primary side of the steam generator. Gases which have been proposed for this use include non-condensible gases such as nitrogen gas. However, if there is a malfunction of the pressuriser or other loss of primary coolant pressure or if the pressure in the secondary circuit is increased too much, such gases may leak from the secondary circuit into the primary circuit, in particular if the leak is near the top of the steam generator where the gas will naturally accumulate. If the gas is nitrogen or another non-condensible gas, it may cause void formations to result in the primary circuit and reactor vessel. Such void formations may cause the primary coolant pumps to malfunction and may also serve to displace primary coolant thereby resulting in a deficiency of core cooling effectiveness.

In addition, most gases such as nitrogen may be available in limited quantities so that there is a possibility of running out of the gas before the cool down period is complete. Furthermore, such gases require burdensome storage capacity and may be expensive to maintain.

European Patent Application Publication No. EP—A—0 114 519, which forms part of the state of the art as regards the present application by virtue of EPC Article 54(3), discloses a method of controlling leaks between primary and secondary circuits inside a steam generator of a pressurised water reactor system, comprising the steps of shutting off a live steam line and feedwater line connected to the secondary circuit, and injecting gas to increase the pressure in the secondary circuit of the steam generator. Although the preferred gas is nitrogen, it is explained in EP—A—0 114 519 that the term "gas" is meant to include other gaseous substances such as steam.

According to the invention there is provided a method of controlling leaks between primary and secondary circuits inside a steam generator of a pressurised water reactor system, comprising the steps of shutting off a live steam line and feedwater line connected to the secondary circuit, and injecting steam to increase the pressure in the secondary circuit of the steam generator, the steam being produced by heating water obtained from within the steam generator in the secondary circuit.

The invention also provides a steam generator a pressurised water reactor system, the steam generator including a primary circuit tube bundle, a secondary circuit, and means for injecting steam into the secondary circuit to increase the pressure of the secondary circuit, the injecting means comprising a heater for heating water to form steam and a steam transport line having an outlet opening into the secondary circuit for transporting the steam to the secondary circuit.

The use of steam as a gas to control such leaks eliminates or at least reduces the possibility of void formation in the primary circuit and reactor vessel if there is a leakage from the secondary to the primary circuit. The use of steam also eliminates or reduces the danger of running out of the gas used in the method before the cool down period is complete. Further, the use of steam, as well as enabling the provision of a method of controlling leaks which can be economical and easy to carry out, avoids the need to store containers of pressurised gas.

The invention will now be further described, by way of illustrative and non-limiting example, with reference to the accompanying drawing, in which:

Figure 1 is a schematic view of a first type of steam generator embodying the invention and illustrating application of a method embodying the present invention; and

Figure 2 is a schematic view of another type of steam generator embodying the invention and illustrating application of a method embodying the present invention.

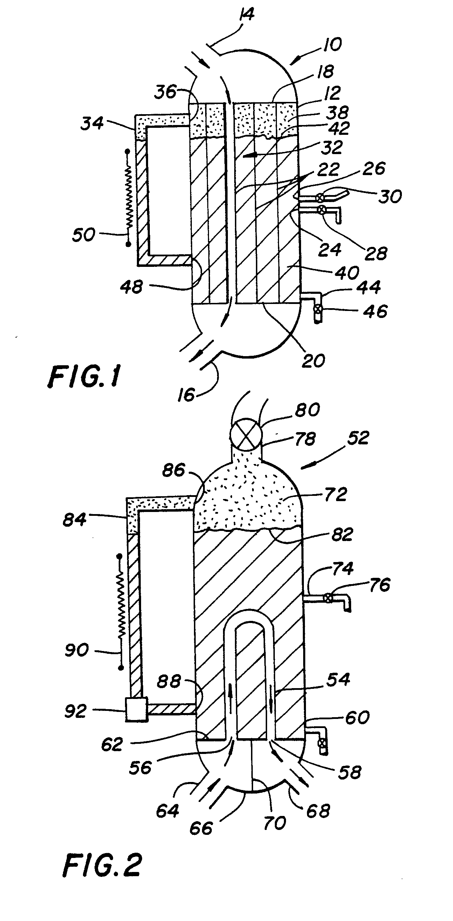

Figure 1 shows schematically a steam generator 10 of what is commonly called the once-through type. The steam generator 10 comprises a shell 12 which extends vertically and is supplied with coolant from a nuclear reactor (not shown) through an inlet nozzle or line 14. The coolant is discharged through an outlet nozzle or line 16 for return to the reactor.

Positioned in the steam generator 10, between and by means of upper and lower tube sheets 18 and 20 respectively and the usual support plates (not shown), are a plurality of tubes 22 through which heated coolant from the reactor core flows. Although a typical steam generator of the type shown may include upwards of 16,000 tubes, only a few tubes, including a single such tube enlarged with respect to the rest of the steam generator, are shown, in order to provide clarity of illustration.

Feedwater is admitted to the steam generator 10 through ports, inlets or lines schematically shown at 24 and steam generated from the feedwater is discharged through ports, outlets or lines schematically shown at 26. After it is admitted to the steam generator 10, the feedwater is directed downwardly to the lower tube sheet 20 then upwardly around the tubes 22 to the upper tube sheet 18 and then downwardly again to the steam outlet 26 by conventional baffles (not shown) or the like. Steam is produced by the flow of the feedwater around the tubes 22 in heat exchange relationship with the higher thermal energy coolant in the tubes. There is thus provided a secondary circuit which includes lines supplying feedwater to the steam generator 10 and lines discharging steam generated from the feedwater, as well as the feedwater and steam spaces in the steam generator. The feedwater inlet 24 and steam outlet 26 are provided with valves 28 and 30, respectively, for shutting off feedwater flow into the steam generator 10 and the steam discharge from the steam generator to thus isolate the steam generator from the remainder of the secondary circuit.

A primary circuit includes the lines 16 providing the flow of coolant discharged from the steam generator 10 to the nuclear reactor for cooling the core thereof and the resulting imparting of thermal energy to the coolant, the lines 14 providing the flow of the coolant back into the tubes of the steam generator to release its thermal energy in heat exchange relation with the feedwater to produce steam and thus become cooled for delivery to the reactor core, and the coolant flow spaces (tubes) in the steam generator.

At 32 there is illustrated an opening or break in a tube 22 carrying the primary coolant, through which opening a leak may occur between the primary and secondary circuits. When such a tube break 32 occurs, it is necessary to shut down the pressurised water reactor system in order to repair the leak. Even during this shut down period, however, it is desirable to prevent any leakage of the radioactive primary coolant into the secondary circuit.

The secondary circuit is normally maintained at or near saturation pressure for production of steam. The radioactive primary coolant is maintained normally at a higher pressure than the secondary circuit pressure in order to maintain the primary coolant pressure greater than saturation pressure so that the primary coolant may remain a liquid to provide a suitable coolant flow for cooling of the reactor core and operation of the primary coolant pumps (not shown). Thus, if the secondary circuit pressure is not increased to match that of the primary circuit, the radioactive primary coolant may enter the secondary circuit of the steam generator 10 through the tube break 32, since the secondary circuit is normally at a lower pressure. In order to prevent such a contamination of the secondary circuit by radioactive primary coolant, the shut-off valves 28 and 30 positioned in the feedwater and live steam lines 24 and 26, respectively, are closed in order to isolate the steam generator 10 from the remainder of the secondary circuit. Of course, it should also be ensured that other auxiliary lines, such as blow down lines, recirculation lines, and drain lines, are suitably isolated. A gas is then injected into the steam generator 10 in the secondary circuit thereof to increase the secondary circuit pressure to that of the primary coolant, the total pressure being the sum of the steam saturation pressure and the gas partial pressure in the steam space 38.

However, when the secondary circuit pressure is increased, there is a possibility that it will be increased to such an extent that there will be a leakage of fluids from the secondary circuit into the primary circuit. In addition, such a leakage into the primary circuit may occur if the pressuriser (not shown) in the primary circuit should fail to maintain the pressure therein. If non-condensible gases are injected into the secondary circuit in order to increase the pressure thereof, such gases may thus leak into the primary circuit, in which case void formations may result in the reactor vessel and primary circuit, which may result in a deficiency of primary coolant to the reactor core as well as preventing the primary coolant pumps from operating. However, steam will condense and not form such void formations and therefore not have such an effect on the primary coolant or coolant pumps. Therefore, the gas which is injected into the secondary circuit to increase the pressure thereof is steam, so as to ensure that such void formations will not occur in the primary circuit if there is a leakage back into the primary circuit.

In addition, steam is used as the injection gas for the additional purposes of eliminating the necessity of storage of other types of gases and, since steam will normally readily be available by heating water, ensuring plentiful quantities of injection gas.

Figure 1 shows schematically a preferred method and apparatus for providing such steam injection. A fluid conveying line 34 has an outlet 36 to inject the steam at a point high up in the steam generator 10, that is, just below the upper tube sheet 18, where a secondary steam space 38 will be formed over the saturated water 40 therebelow. The boundary of the secondary steam space 38 with the saturated secondary liquid 40, that is the secondary liquid level, is illustrated at 42. Natural circulation as depicted in Figure 1, or forced circulation with a pump, may be utilised to cause flow in the fluid conveying line 34.

Since the primary coolant is sub-cooled and the injected steam is therefore at a higher temperature—perhaps 232°C (450°F) than that of the primary coolant perhaps 177°C (350°F) there will be a tendency for the injected steam to condense at the tube walls. Thus, it may be necessary to continue injecting steam as necessary to maintain a secondary circuit pressure equal to the primary coolant pressure. In such a case, there will of course be a tendency for the secondary liquid level 42 to rise in the steam generator 10 if the injection steam is generated from a source other than the secondary liquid 40, and it may then be necessary to blow it down from time to time, such as through a blow down line 44 equipped with a normally closed valve 46, by opening the normally closed valve 46 until sufficient secondary liquid 40 has been drained from the steam generator 10 so that the secondary steam space 38 is maintained. In order to eliminate this requirement of blowing down the secondary circuit from time to time, the water to produce the steam is preferably drawn from the secondary circuit liquid through an inlet 48 so that water will not be added to the secondary circuit. It should be understood, however, that the source of the water to produce steam may be an external source. A conventional suitable heating means for generating steam, such as a boiler, an internal heater, or an external indirect heater schematically illustrated at 50, is provided in the line 34 for generating the injection steam. If desired, it is envisaged that the heater may be located within the secondary circuit spaces in the steam generator.

Figure 2 schematically illustrates a steam generator 52 of the U-tube type. In this type of steam generator, the tube bundle comprises a plurality of U-shaped tubes 54, both the inlet and outlet ends 56 and 58, respectively, of which open at a bottom portion 60 of the steam generator 52 at a tube sheet 62. The primary coolant enters through a nozzle 64 on one side of a lower hemispherical head 66 to enter the tube inlets 56 and leaves through the tube outlets 58 and nozzle 68 on the other side of the hemispherical head, there being a partition 70 between the inlets and outlets. Again, for ease of illustration, only a single enlarged tube 54 is shown in Figure 2. The height of a typical U-tube type steam generator is in the region of 12 m (40 feet). The tubes 54 extend upwardly in the steam generator 52 for a distance of typically 6 m (20 feet) to a point below the top of the steam generator. A secondary steam space 72 is thus provided to extend upwardly from the top of the tubes 54 for a distance of typically 6 m (20 feet) to provide for steam separation.

The secondary circuit feedwater is typically introduced into the steam generator at a point slightly above or a little below the tops of the tubes 54 such as through a feedwater line 74 having a valve 76. The feedwater is then directed through conventional baffle means (not shown) or the like downwardly to the tube sheet 62, after which it is directed upwardly in heat exchange relationship with the tubes 54 to receive heat from the primary coolant. The separated steam then exits from the steam generator at the top thereof through a line 78 and valve 80.

The process for controlling tube leaks, discussed with respect to Figure 1, may also be applied to the U-tube steam generator 52. As noted with respect to the discussion of the once-through steam generator 10, if the steam is in contact with the tube walls it will have a greater tendency to condense, thus requiring additional energy to provide additional injection steam. In order to minimise such condensation, in accordance with a preferred embodiment of this invention particularly suitable for the U-tube type of steam generator 52, the secondary liquid level 82 in the steam generator 52 is maintained at a level higher than the tube height and the steam is injected into the secondary steam space 72 above the tubes, as shown in Figure 2, through a line 84 and an outlet 86 in order to prevent contact of the steam with the tube walls. It is preferred that the water level 82 in the U-tube steam generator 52 be maintained at least 152 mm (6 inches) above the height of the U-tubes 54 when steam is injected, in order to minimise contact of the steam with the walls of the tubes.

The line 84 draws secondary liquid from the steam generator 52 at an inlet 88 and directs that liquid through the outlet 86, and is provided with heating means 90 similar to the provision of the outlet 36 and the inlet 48 and heating means 50 of Figure 1, except that a pump 92 is provided in the line 84 to provide forced circulation, thereby permitting minimum size lines so as to reduce space requirements. The line 34 in Figure 1 may also include such forced circulation means, but is shown to provide natural circulation thereby eliminating the possibility of mechanical problems which might arise with a forced circulation pump. If desired, the line 84 of the U-tube steam generator may alternatively be provided with natural circulation.

If there is a tube leak requiring a shut-down of the steam generator, the primary coolant temperatures may be lowered at a rate of perhaps 28 to 56 deg C (50 to 100 deg F) per hour with the pressure being maintained at a little higher than saturation pressure in order to prevent malfunctioning of the pumps and to avoid steam voids which may result in core cooling deficiencies. In such a case, the saturation temperature in the primary circuit may, for example, correspond to 6.90 MPa (1000 lbf/in$^2$). The pressuriser (not shown) may add another 1.03 MPa (150 lbf/in$^2$) to the primary circuit pressure, thus bringing it to 7.93 MPa (1150 lbf/in$^2$). Since the secondary circuit temperature will be substantially the same as the primary circuit temperature, the secondary circuit pressure will be saturation pressure or 6.90 MPa (1000 lbf/in²). In such a case, it will be necessary to add to the secondary steam space of the steam generator steam to increase the pressure therein by 1.03 MPa (150 lbf/in²) so that it equals the primary coolant pressure.

## Claims

1. A method of controlling leaks between primary and secondary circuits inside a steam generator (10; 52) of a pressurised water reactor system, comprising the steps of shutting off a live steam line (26: 78) and feedwater line (24; 74) connected to the secondary circuit, and injecting steam to increase the pressure in the secondary circuit of the steam generator, the steam being produced by heating water obtained from within the steam generator (10; 52) in the secondary circuit.

2. A method according to claim 1, wherein the steam generator (52) has a primary circuit tube bundle which includes a plurality of tubes (54) each having an inlet (56) and an outlet (58) which open into a bottom portion (60) of the steam generator (52), the height of each tube (54) being such that a secondary steam space (72) is provided between the tops of the tubes (54) and the top of the steam generator (52).

3. A method according to claim 2, wherein the steam is injected into the secondary steam space (72) and the secondary circuit water level (82) is maintained above the tops of the tubes (54).

4. A method according to claim 1, wherein the steam generator (52) is of the U-tube type wherein both inlets (56) and outlets (58) of tubes (54) thereof open into a bottom portion (60) of the steam generator, the secondary circuit water level (82) being maintained above the tops of the tubes (54) and the steam being injected into a space (72) above the water level.

5. A method according to any one of the preceding claims, wherein the secondary circuit pressure is raised by the injection of steam to a pressure at least as great as the primary circuit pressure.

6. A method according to any one of the preceding claims, comprising pumping the water to provide forced circulation to the point of injection.

7. A steam generator of a pressurised water reactor system, the steam generator (10; 52) including a primary circuit tube bundle, a secondary circuit, and means for injecting steam into the secondary circuit to increase the pressure of the secondary circuit, the injecting means comprising a heater (50; 90) for heating water to form steam and a steam transport line (34; 84) having an outlet (36; 86) opening into the secondary circuit for transporting the steam to the secondary circuit.

8. A steam generator according to claim 7, wherein each tube (54) of the tube bundle has an inlet (56) and an outlet (58) which both open into a bottom portion (60) of the steam generator (52), and each tube (54) has a height to provide a secondary steam space (72) between the tops of the tubes (54) and the top of the steam generator (52).

9. A steam generator according to claim 8, wherein the outlet (86) of the steam transport line (84) is above the tops of the tubes (54).

10. A steam generator according to claim 9, wherein the steam transport line (84) has an inlet (88) which opens into the steam generator (52) at a location below the tops of the tubes (54) to draw water from the secondary circuit to produce steam.

11. A steam generator according to any one of claims 7 to 9, wherein the steam transport line (34; 84) has an inlet (48; 88) connected to draw water from the secondary circuit to produce steam.

12. A steam generator according to any one of claims 7 to 11, comprising a pump (92) in the steam transport line (34; 84) to provide forced circulation in the steam transport line.

## Patentansprüche

1. Verfahren zur Kontrolle von Leckagen zwischen primären und sekundären Kreisläufen innerhalb eines Wasserdampfgenerators (10; 52) eines Druckwasserreaktorsystems mit den Stufen eines Absperrens einer durchströmten Wasserdampfleitung (26; 78) und mit dem Sekundärkreislauf verbundenen Speisewasserleitung (24; 74) und eines Einspritzens von Wasserdampf zur Erhöhung des Druckes in dem sundären Kreislauf des Wasserdampfgenerators, wobei der Wasserdampf durch Erhitzen von Wasser erzeugt wird, das man von innerhalb des Wasserdampfgenerators (10; 52) in dem sekundären Kreislauf erhält.

2. Verfahren nach Anspruch 1, bei dem der Wasserdampfgenerator (52) ein Rohrbündel des primären Kreislaufes hat, welches mehrere Rohre (54) einschließt, von denen jedes einen Einlaß (56) und einen Auslaß (58) hat, die in einen Bodenabschnitt (60) des Wasserdampfgenerators (52) münden, wobei die Höhe eines jeden Rohres (54) derart ist, daß ein Sekundärwasserdampfraum (72) zwischen den oberen Enden der Rohre (54) und dem oberen Ende des Wasserdampfgenerators (52) vorgesehen wird.

3. Verfahren nach Anspruch 1, bei dem der Wasserdampf in den Sekundärwasserdampfraum (72) eingespritzt wird und der Wasserspiegel des sekundären Kreislaufes oberhalb der oberen Enden der Rohre (54) gehalten wird.

4. Verfahren nach Anspruch 1, bei dem der Wasserdampfgenerator (52) vom U-Rohrtyp ist, bei dem beide Einlässe (56) und Auslässe (58) seiner Rohre (54) in einen Bodenabschnitt (60) des Wasserdampfgenerators münden, wobei der Wasserspiegel (82) des sekundären Kreislaufes oberhalb der oberen Enden der Rohre (54) gehalten wird und der Wasserdampf in einen Raum (72) oberhalb des Wasserspiegels eingespritzt wird.

5. Verfahren nach einem der vorausgehenden Ansprüche, bei dem der Druck des sekundären Kreislaufs durch das Einspritzen von Wasserdampf bis zu einem Druck wenigstens so groß wie der Druck des primären Kreislaufes gesteigert wird.

6. Verfahren nach einem der vorausgehenden Ansprüche, bei dem das Wasser, um Zwangszirkulation zu bekommen, zu dem Einspritzpunkt gepumpt wird.

7. Wasserdampfgenerator eines Druckwasserreaktorsystems, wobei der Wasserdampfgenerator (10; 52) ein Primärkreislauf-Rohrbündel, einen Sekundärkreislauf und Einrichtungen zum Einspritzen von Wasserdampf in den Sekundärkreislauf, um den Druck des Sekundärkreislaufes zu steigern, enthält und wobei die Einspritzeinrichtungen eine Heizeinrichtung (50; 90) zum Erhitzen von Wasser unter Bildung von Wasserdampf und eine Wasserdampftransportleitung (34; 84) mit einem Auslauf (36; 86), der für einen Transport des Wasserdampfes zu dem Sekundärkreislauf in den Sekundärkreislauf mündet, hat.

8. Wasserdampfgenerator nach Anspruch 7, bei dem jedes Rohr (54) des Rohrbündels einen Einlaß (56) und einen Auslaß (58) hat, die beide in einen Bodenabschnitt (60) des Wasserdampfgenerators (52) münden, und jedes Rohr (54) eine Höhe hat, die einen Sekundärwasserdampfraum (72) zwischen den oberen Enden der Rohre (54) und dem oberen Ende des Wasserdampfgenerators (52) ergibt.

9. Wasserdampfgenerator nach Anspruch 8, bei dem der Auslaß (86) der Wasserdampftransportleitung (84) oberhalb der oberen Enden der Rohre (54) liegt.

10. Wasserdampfgenerator nach Anspruch 9, bei dem die Wasserdampftransportleitung (84) einen Einlaß (88) hat, der in den Wasserdampfgenerator (52) an einer Stelle unterhalb der oberen Enden der Rohre (54) mündet, um Wasser zur Erzeugung von Wasserdampf aus dem Sekundärkreislauf abzuziehen.

11. Wasserdampfgenerator nach einem der Ansprüche 7 bis 9, bei dem die Wasserdampftransportleitung (34; 84) einen Einlaß (48; 88) hat, der so verbunden ist, daß Wasser aus dem Sekundärkreislauf zur Erzeugung von Wasserdampf abgezogen wird.

12. Wasserdampfgenerator nach einem der Ansprüche 7 bis 11 mit einer Pumpe (92) in der Wasserdampftrasportleitung (34; 84), um eine Zwangszirkulation in der Wasserdampftransportleitung zu bekommen.

## Revendications

1. Procédé de contrôle de fuites entre des circuits primaire et secondaire à l'intérieur d'un générateur de vapeur (10; 52) d'un système à eau pressurisée, comportant les opérations de fermeture d'une canalisation de vapeur vive (26; 78) et d'une canalisation d'eau d'alimentation (24; 74) reliées au circuit secondaire, et d'injection de vapeur en vue d'augmenter la pression dans le circuit secondaire du générateur de vapeur, la vapeur étant produite en chauffant de l'eau obtenue à partir de l'intérieur du générateur de vapeur (10; 52) dans le circuit secondaire.

2. Procédé selon la revendication 1, dans lequel le générateur de vapeur (52) possède un faisceau de tubes de circuit primaire qui comprend un ensemble de tubes (54) possédant chacun un orifice d'admission (56) et un orifice de sortie (58) qui débouchent dans une partie inférieure (60) du générateur de vapeur (52), la hauteur de chaque tube (54) étant telle qu'un espace de vapeur secondaire (72) est ménagé entre les sommets des tubes (54) et le sommet du générateur de vapeur (52).

3. Procédé selon la revendication 2, dans lequel la vapeur est injecté dans l'espace de vapeur secondaire (72) et le niveau d'eau du circuit secondaire (82) est maintenu au dessus des sommets des tubes (54).

4. Procédé selon la revendication I, dans lequel le générateur de vapeur (52) est du type à tubes en U dans lequel à la fois les orifices d'admission (56) et les orifices de sortie (58) des tubes (54) de celui-ci débouchent dans une partie inférieure (60) du générateur de vapeur, le niveau d'eau du circuit secondaire (82) étant maintenu au dessus des sommets des tubes (54) et la vapeur étant injectée dans un espace (72) au dessus du niveau de l'eau.

5. Procédé selon l'une quiconque des revendications précédentes, dans lequel la pression du circuit secondaire est accrue par l'injection de vapeur à une pression au moins aussi grande que la pression du circuit primaire.

6. Procédé selon l'une quelconque des revendicatons précédentes, comportant le pompage de l'eau pour assurer une circulation forcée au point d'injection.

7. Générateur de vapeur d'un système de réacteur à eau pressurisée, le générateur de vapeur (10; 52) comprenant un faisceau de tubes de circuit primaire, un circuit secondaire, et des moyens en vue d'injecter de la vapeur dans le circuit secondaire pour accroître la pression du circuit secondaire, les moyens d'injection comportant un organe de chauffage (5à; 90) en vue de chauffer de l'eau pour former de la vapeur et une canalisation de transport de vapeur (34; 84) possédant un orifice de sortie (36; 86) débouchant dans le circuit secondaire pour transporter la vapeur jusqu'au circuit secondaire.

8. Générateur de vapeur selon la revendication 7, dans lequel chaque tube (54) du faisceau de tubes possède un orifice d'admission (56) et un orifice de sortie (58) qui débouchent tous deux dans une partie inférieure (60) du générateur de vapeur (52) et chaque tube (54) possède une hauteur pour ménager un espace de vapeur secondaire (72) entre les sommets des tubes (54) et le sommet du générateur de vapeur (52).

9. Générateur de vapeur selon la revendication 8, dans lequel l'orifice de sortie (86) de la canalisation de transport de vapeur (84) se trouve au dessus des sommets des tubes (54).

10. Générateur de vapeur selon la revendication 9, dans lequel la canalisation de transport de vapeur (84) possède un orifice d'admission (88) qui débouche dans le générateur de vapeur (52) en un emplacement au dessous des sommets des tubes (54) pour extraire de l'eau du circuit secondaire pour produire de la vapeur.

11. Générateur de vapeur selon l'une quelconque des revendications 7 à 9, dans lequel la canalisation de transport de vapeur (34; 84) possède un orifice d'admission (48; 88) relié pour extraire de l'eau du circuit secondaire en vue de produire de la vapeur.

12. Générateur de vapeur selon l'une quelconque des revendications 7 à 11, comportant une pompe (92) dans la canalisation de transport de vapeur (34: 84) pour créer une circulation forcée dans la canalisation de transport de vapeur.

FIG.1

FIG.2